# EUROPÄISCHE PATENTSCHRIFT

(11) **EP 2 249 043 B1**
(45) Veröffentlichungstag und Bekanntmachung des Hinweises auf die Patenterteilung: **23.01.2013**
(21) Anmeldenummer: 10008711.3
(22) Anmeldetag: 06.10.2004
(51) Int. Cl.: F04D 29/68

(54) **Strömungsarbeitsmaschine mit Fluidentnahme**
Compressor or pump with fluid extraction
Compresseur ou pompe avec extraction de fluide

(30) Priorität: 26.11.2003 DE 10355240
(43) Veröffentlichungstag der Anmeldung: 10.11.2010
(62) Teilanmeldung aus: 04023822.2
(73) Patentinhaber: Rolls-Royce Deutschland Ltd & Co KG, 15827 Blankenfelde-Mahlow (DE)
(72) Erfinder: Gümmer, Volker, 15831 Mahlow (DE)
(74) Vertreter: Weber, Joachim

(56) Entgegenhaltungen:
- DE-A1- 1 628 261
- DE-A1- 2 834 822
- US-A- 3 735 593

## Beschreibung

Die vorliegende Erfindung bezieht sich auf Strömungsarbeitsmaschinen, wie etwa Bläser, Verdichter, Pumpen und Ventilatoren, sowohl in axialer, halbaxialer als auch in radialer Bauart. Das Arbeitsmedium oder Fluid kann gasförmig oder flüssig sein.

Im Einzelnen betrifft die Erfindung eine Strömungsarbeitsmaschine mit zumindest einem Rotor, wobei der Rotor mehrere an einer rotierenden Welle befestigte Rotorschaufeln umfasst. Es kann mindestens ein Stator existieren, wobei der Stator mit feststehenden Statorschaufeln versehen ist. Es muss ein Gehäuse existieren, welches die Durchströmung des Rotors und Stators mit einem Fluid nach außen begrenzt.

Die aerodynamische Belastbarkeit und der Wirkungsgrad von Strömungsarbeitsmaschinen, beispielsweise Bläsern, Verdichtern, Pumpen und Ventilatoren, wird durch das Wachstum und die Ablösung von Grenzschichten auf den Schaufeln sowie auf den Naben- und Gehäusewänden begrenzt.

Der Stand der Technik schlägt gegen dieses fundamentale Problem vor, die Grenzschicht des Fluids zu entfernen. Abgesehen von dieser sehr allgemeinen Vorgabe sind die vorbekannten Lösungen trivial und nur bedingt effektiv.

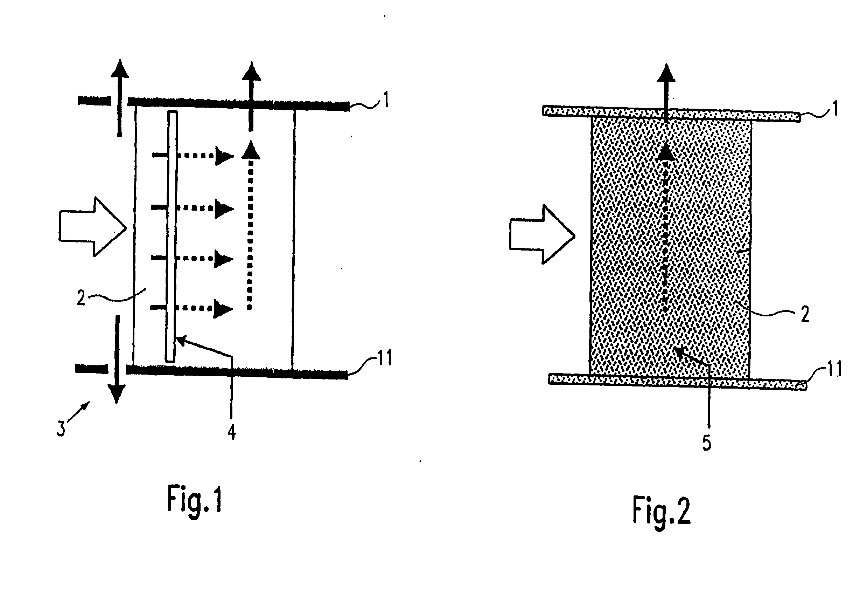

Die Fig. 1 und 2 zeigen in schematischer Darstellung einige aus dem Stand der Technik bekannten Lösungen. Dabei zeigt die Fig. 1 in schematischer Darstellung ein Gehäuse 1 und eine Nabe 11, zwischen welchen ein Fluid, wie durch den großen Pfeil dargestellt, von links anströmt. Das Bezugszeichen 2 zeigt in schematischer Darstellung eine Schaufel, deren sichtbarer Bereich die "Saugseite" bildet. Wie durch die nach oben gerichteten Pfeile der Fig. 1 gezeigt, erfolgt eine lokale Luftentnahme auf der Schaufelsaugseite und im Axialspalt in achsensymmetrischer Anordnung. Der nach unten gerichtete, linke Pfeil zeigt eine Luftentnahme, die bei einem Rotor oder Stator durch einen Umfangsschlitz 3 vor der Schaufel erfolgt. Das Bezugszeichen 4 zeigt eine Lösung, bei welcher bei einem Stator über einen Schlitz und bei einem Rotor über eine Perforation, einen Schlitz, Löcher oder einen Staueinlauf Luft entnommen wird.

Die Fig. 2 zeigt mit dem nach oben gerichteten Pfeil eine globale Luftentnahme durch poröse Schaufeloberflächen. Das Bezugszeichen 5 bezeichnet einen Stator mit einem feinporigen, schwitzfähigen Werkstoff.

Der Stand der Technik beschreibt somit unterschiedliche Methoden, die eine in Strömungsrichtung punktuell begrenzte Entnahme der Grenzschicht durch Schlitze oder Löcher auf der Schaufelsaugseite oder durch achsensymmetrische Schlitze an den Seitenwänden (Nabe, Gehäuse) vor der Schaufel vorsehen. Dabei ist, wie erwähnt, auch vorgeschlagen worden, bei Statoren die Luftabfuhr auf einer über die ganze Schaufeloberfläche verteilten, globale Grenzschichtabsaugung durch feinporiges Material vorzunehmen.

Diese beschriebenen Maßnahmen besitzen entweder keinerlei spezifische Ausrichtung auf strömungstechnisch besonders problematische Zonen innerhalb der Schaufelpassage oder orientieren sich an der einfachen Vorstellung von zweidimensionalen Profilumströmungen, ohne Berücksichtigung der komplizierten dreidimensionalen Strömungsvorgänge im Seitenwandbereich einer Schaufel (nahe an einer Nabe oder an einem Gehäuse).

Üblicherweise wird beim Stand der Technik die Grenzschicht zunächst ins Schaufelinnere geführt und dann aus der Schaufel und dem Ringkanal der Strömungsarbeitsmaschine entfernt.

Eine Lösung sieht die Absaugung auf der Schaufelsaugseite und ein direktes Wiedereinströmen an der Schaufelspitze derselben Schaufel vor.

Weiterhin existieren im Stand der Technik Entwürfe, die Umfangsschlitze vor oder hinter einer Schaufelreihe an einer Nabe oder einem Gehäuse vorsehen, um die dortige Seitenwandgrenzschicht abzusaugen. Diese Maßnahme richtet sich allein auf die Reduzierung der Grenzschichtdicke am Schaufeleintritt ohne spezifische Ausrichtung auf besonders problematische Seitenwandzonen innerhalb der Schaufelpassage.

Der oben beschriebene Stand der Technik ist schriftlich in nachfolgenden Veröffentlichungen dokumentiert.

Zur Absaugung auf der Schaufeloberfläche durch Löcher, Einzelschlitze oder poröse Zonen sind die folgenden US-Patente zu nennen:
US 2,870,957
US 2,720,356
US 3,694,102
US 3,993,414
US 5,904,470
US 5,480,284

Die Absaugung an der Nabe oder am Gehäuse durch Umfangsschlitze vor oder hinter der Schaufelreihe zeigen folgen Veröffentlichungen:
Schuler et al.: Design, Analysis, Fabrication and Test of an Aspirated Fan Stage, ASME Paper 2000-GT-618, und
Merchant et al.: Aerodynamic Design and Analysis of a High Pressure Ratio Aspirated Compressor Stage, ASME Paper 2000-GT-619.

Als nachteilig erweist es sich beim Stand der Technik, dass die existierenden Lösungen keine hochwirksamen und insbesondere hinsichtlich des Wirkungsgrades der Strömungsarbeitsmaschine günstige Lösungen bilden. Vielmehr sind die existierenden Absaugekonzepte vergleichsweise primitiv und sehen entweder die alleinige Absaugung der Profilgrenzschichten auf der Schaufeloberfläche vor oder kombinieren dies mit einer Absaugung vor der Schaufelreihe durch achsensymmetrische Ringschlitze an Nabe oder Gehäuse.

Die DE 1 628 261 A zeigt eine Strömungsarbeitsmaschine mit Mitteln zur Entnahme von Fluid im Bereich der Ringkanalwandung, wobei die Luftentnahmeöffnung an einem rückgesetzten absatzartigen Bereich in Form eines Schlitzes an einer Schaufelspitze ausgebildet ist.

Der Erfindung liegt die Aufgabe zugrunde, eine Strömungsarbeitsmaschine der eingangs genannten Art zu schaffen, welche unter Vermeidung des Standes der Technik eine sehr wirkungsvolle Grenzschichtentfernung sowie einen hohen Wirkungsgrad aufweist.

Erfindungsgemäß wird die Aufgabe durch die Merkmalskombination des Hauptanspruchs gelöst, die Unteransprüche zeigen weitere vorteilhafte Ausgestaltungen der Erfindung.

Die erfindungsgemäße Strömungsarbeitsmaschine kann eine oder mehrere Stufen mit jeweils einem Rotor und einem Stator umfassen, in Einzelfällen wird die Stufe lediglich durch einen Rotor gebildet.

Erfindungsgemäß besteht der Rotor aus einer Anzahl von Schaufeln, die mit der rotierenden Welle der Strömungsarbeitsmaschine verbunden sind und Energie an das Arbeitsmedium abgeben. Der Rotor ist ohne Deckband am äußeren Schaufelende ausgeführt. Der erfindungsgemäße Stator besteht aus einer Anzahl feststehender Schaufeln, die nabenseitig oder gehäuseseitig mit freiem Schaufelende ausgeführt sein müssen.

Die erfindungsgemäß vorgesehene Rotortrommel und die Beschaufelung sind von einem Gehäuse umgeben.

Die Strömungsarbeitsmaschine kann auch einen Stator vor dem ersten Rotor aufweisen, ein so genanntes Vorleitrad.

Es kann mindestens ein Stator oder Vorleitrad abweichend von der unbeweglichen Fixierung auch drehbar gelagert sein, um den Anströmungswinkel zu verändern. Eine Verstellung erfolgt beispielsweise durch eine von außerhalb des Ringkanals zugängliche Spindel.

In besonderer Ausgestaltung kann die Strömungsarbeitsmaschine mindestens eine Reihe verstellbarer Rotoren aufweisen.

In einer alternativen Ausgestaltung der erfindungsgemäßen Strömungsarbeitsmaschine kann auch vorgesehen sein, dass diese bei Mehrstufigkeit zwei gegenläufige Wellen besitzt, so dass die Rotorschaufelreihen von Stufe zu Stufe die Drehrichtung wechseln. Hierbei existieren keine Statoren zwischen aufeinander folgenden Rotoren.

Die Strömungsarbeitsmaschine kann alternativ auch eine Nebenstromkonfiguration derart aufweisen, dass sich der einstromige Ringkanal hinter einer bestimmten Schaufelreihe in zwei konzentrische Ringkanäle aufteilt, die ihrerseits mindestens jeweils eine weitere Schaufelreihe umfassen.

Es ist somit im Einzelnen eine Strömungsarbeitsmaschine geschaffen worden, die Mittel zur Entnahme von Fluid an mindestens einer Schaufel einer Schaufelreihe des Rotors und/oder des Stators an nicht-achsensymmetrisch angeordneten, aerodynamisch kritischen Orten auf Schaufelspitzen- und Ringkanaloberflächen (SRO) umfasst.

Zusätzlich zu Fluidentnahmevorrichtungen an SRO kann die Strömungsarbeitsmaschine an mindestens einer Schaufel einer Statorreihe Mittel zur Fluidentnahme aufweisen, die auf der Schaufelsaugseite in Meridianströmungsrichtung nicht punktuell, sondern über einen definierten Bereich verteilt angelegt sind, und deren Meridianerstreckung in Meridianstromlinien oder orthogonaler Richtung zu wenigstens einer der Ringkanalwände (Nabe oder Gehäuse) hin abnimmt (saugseitige, intensitätsvariable Fluidentnahme SIFE).

Im Folgenden werden Beispiele in Verbindung mit den Figuren beschrieben, wobei ledegliich die Figuren 14 bis 16 die Erfindung betreffen, strang genommen nur Abbildung 15. Dabei zeigt:
- Fig. 1: eine schematische Darstellung des Standes der Technik,
- Fig. 2: eine abgewandelte Darstellung eines weite- ren aus dem Stand der Technik bekannten Beispiels,
- Fig. 3: eine schematische Darstellung eines Grundkonzepts,
- Fig. 4: eine weitere Darstellung unterschiedlicher Varianten,
- Fig. 5: verschiedene Varianten und Konfigurationen der erfindungsgemäßen Strömungsarbeitsma- schine,
- Fig. 6: eine Darstellung zur Definition des Begriffs SRO,
- Fig. 7: eine weitere Darstellung zur Definition von SRO,
- Fig. 8 bis 10: unterschiedliche Ausgestaltungsformen von Kammern zur Abführung des Fluids vornehm- lich vom Gehäuse aus,
- Fig. 11 bis 13: Ausgestaltungsvarianten analog Fig. 8 bis 10 mit Kammern zur Abführung des Fluids vornehmlich von der Nabe aus,
- Fig. 14 bis 16: Ausführungsvarianten einer Fluidentnahmevorrichtung an Schaufel- spitzen- und Ringkanaloberflächen des Typs C.

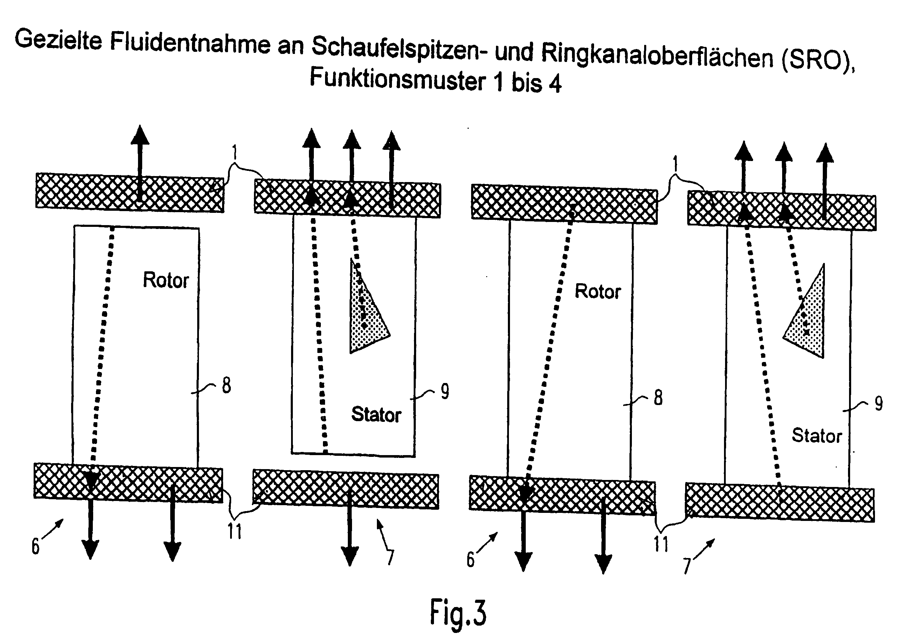

Die Fig. 3 zeigt in stark vereinfachter Darstellung eine Lösung an vier unterschiedlich konfigurierten Schaufelreihen, welche jeweils einen Rotor 6 bzw. einen Stator 7 umfassen, die mit Rotorschaufeln 8 bzw. Statorschaufeln 9 versehen sind. Mit dem Bezugszeichen 1 wird in stark vereinfachter Darstellung ein Gehäuse oder ein außen liegendes Deckband wiedergegeben. Das Bezugszeichen 11 kennzeichnet eine Rotortrommel oder ein innen liegendes Deckband. Dargestellt ist die Saugseite der jeweiligen Schaufel. Auf Statoren ist eine Zone für saugseitige, intensitätsvariable Fluidentnahme (SIFE) vorgesehen.

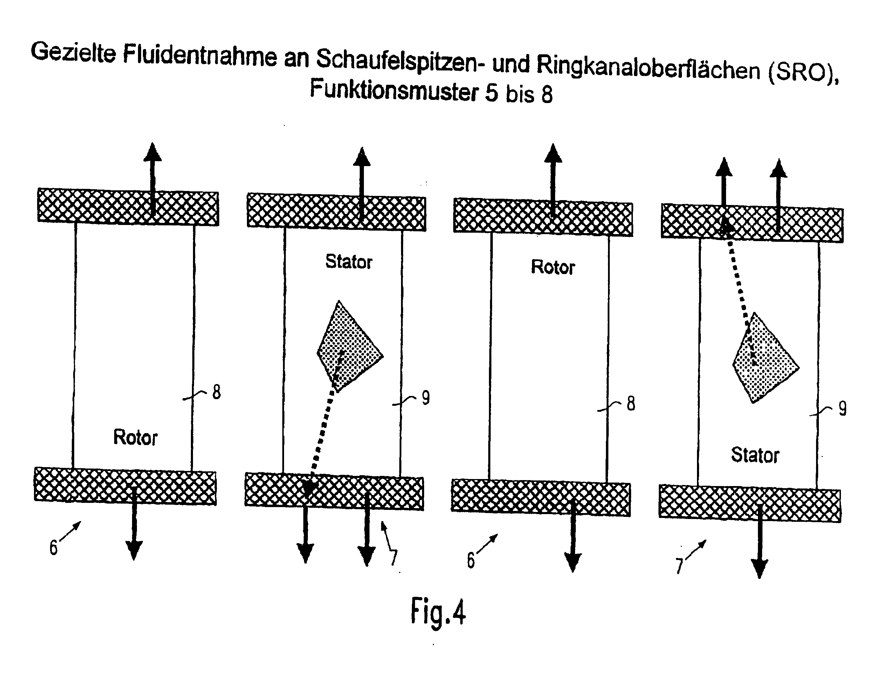

In analoger Weise zeigt die Fig. 4 ein Grundkonzept.

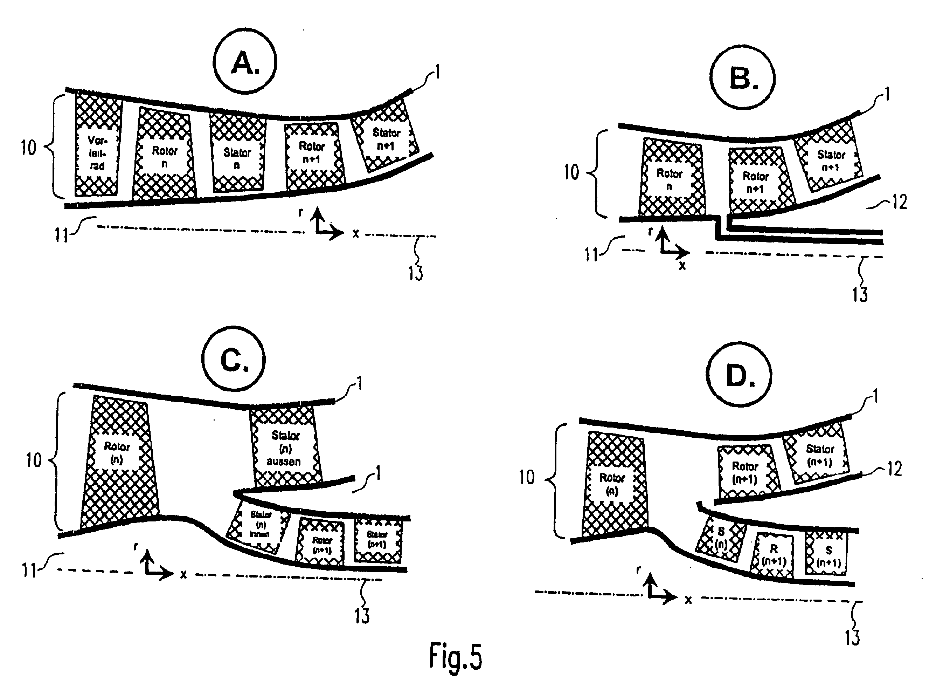

Die Fig. 5 zeigt vier verschiedene Konfigurationen der erfindungsgemäßen Strömungsarbeitsmaschine. Dabei bezeichnet das Bezugszeichen 10 einen von links nach rechts zu durchströmenden Ringkanal, mit dem Bezugszeichen 13 ist die Maschinenachse dargestellt, um welche sich eine Rotortrommel (Nabe) 11 dreht. Bei den in den Fig. 5B und 5D gezeigten Beispielen ist eine weitere Rotortrommel (Nabe) 12 vorgesehen. Die Rotoren, Statoren sowie das Vorleitrad sind jeweils in Fig. 5 beschriftet, es ist jeweils in schematischer Weise eine Schaufel dargestellt.

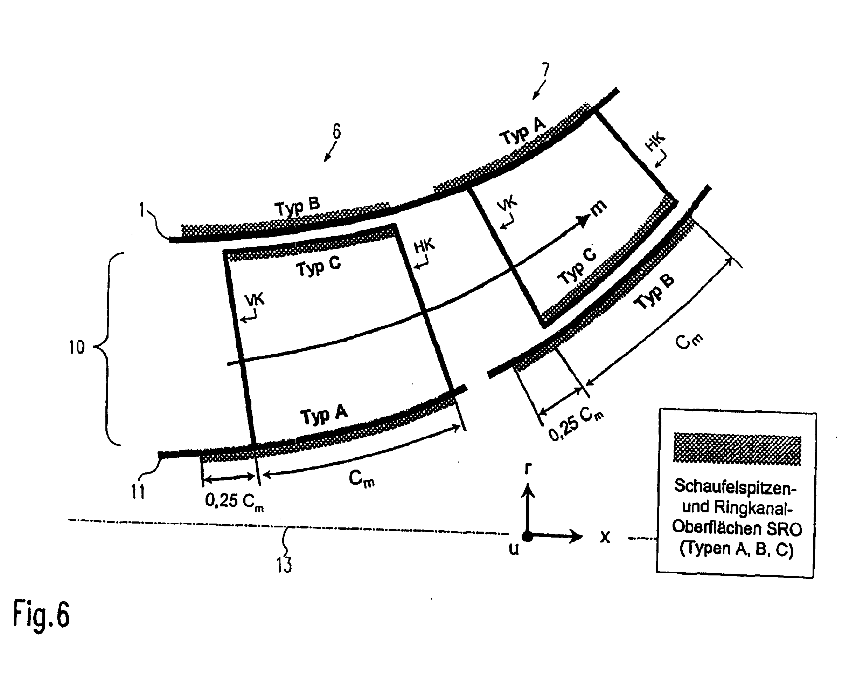

Die Fig. 6 zeigt die Definition der Schaufelspitzen- und Ringkanaloberflächen (SRO). Dabei sind insgesamt drei Typen dargestellt. Es ist wiederum vereinfacht ein Rotor 6 sowie ein Stator 7 gezeigt, die im Ringkanal 10 zwischen einem Gehäuse 1 und einer Nabe (Rotortrommel) 11 angeordnet sind.

### Es ergeben sich somit folgende SRO-Typen:

SRO, Typ A: Die Oberflächen sind an der Naben- oder Gehäusekontur des Ringkanals mit fester Verbindung zur Schaufel ausgebildet, wie sie im Fall von Plattformen, Deckbändern, Bliskund Blingkonfigurationen auftreten, und zwar zwischen der Hinterkantenebene HK und einer Ebene, die sich 25 % der meridionalen Schaufelsehnenlänge Cm vor der Vorderkantenebene VK befindet.

SRO, Typ B: Die Oberflächen sind an Naben- oder Gehäusekonturen des Ringkanals 10 im Bereich freier Schaufelenden (oberhalb von Rotoren ohne Deckband oder unterhalb von Statoren ohne Deckband) zwischen der Hinterkantenebene HK und einer Ebene, die sich 25 % der meridionalen Schaufelsehnenlänge Cm vor der Vorderkantenebene VK befindet, ausgebildet.

SRO, Typ C: Die Oberflächen sind an Schaufeln an deren freien Schaufelenden ausgebildet, die der Naben- oder der Gehäusekontur des Ringkanals 10 zugewandt sind (Spitzenstirnflächen der Schaufel).

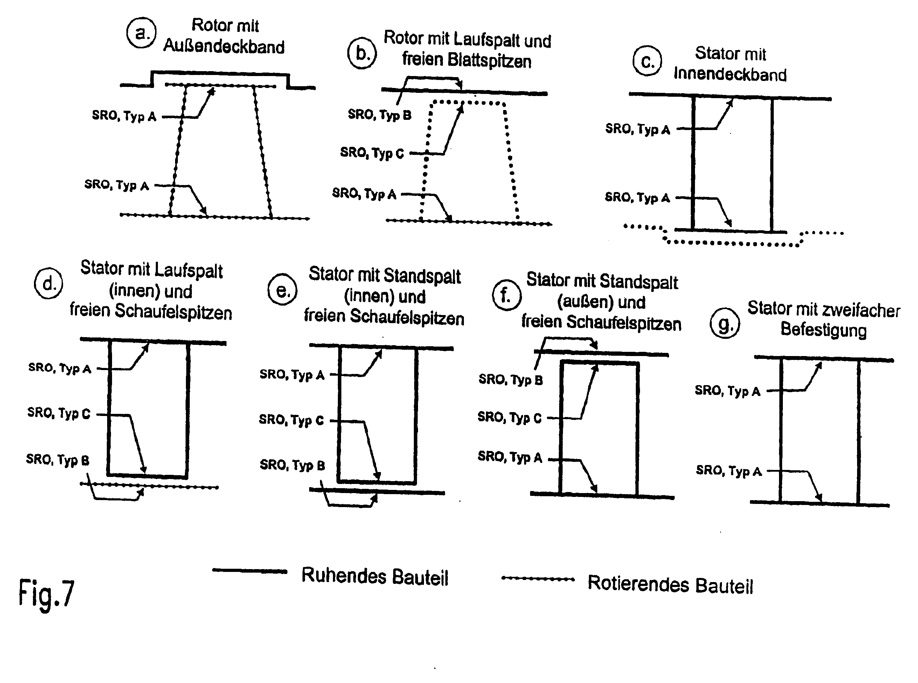

Die Fig. 7 zeigt unterschiedliche Ausführungen von Schaufelreihen einer Strömungsarbeitsmaschine mit einer Kennzeichnung der wiederkehrenden Elemente SRO, Typ A, Typ B, Typ C. Im Einzelnen zeigen dabei die Beispiele Folgendes:
Die Fig. 7a zeigt eine Baugruppe, bestehend aus einer Rotortrommel, mit mehreren mit der Trommel rotierenden Rotorschaufeln, einem die Rotorschaufeln am äußeren Umfang umgebenden und mitrotierenden Deckband sowie einem die rotierenden Teile umgebenden und ruhenden Gehäuse.
Die Fig. 7b zeigt eine Variante mit einer Baugruppe, bestehend aus einer Rotortrommel, mehreren mit der Trommel rotierenden Rotorschaufeln mit freien äußeren Enden, sowie einem die rotierenden Teile umgebenden und ruhenden Gehäuse.
Die Fig. 7c zeigt eine Baugruppe, bestehend aus einem ruhenden Außengehäuse, mehreren mit dem Außengehäuse verbundenen Statorschaufeln, sowie einem von den Statorschaufeln am inneren Umfang getragenen Deckband und einer innerhalb der ruhenden Bauteile rotierenden Rotortrommel.
Die Fig. 7d zeigt eine Baugruppe, bestehend aus einem ruhenden Außengehäuse, mehreren mit dem Außengehäuse verbundenen Statorschaufeln mit freien inneren Enden und einer innerhalb der ruhenden Bauteile rotierenden Rotortrommel.
Aus Fig. 7e ist eine Baugruppe ersichtlich, welche aus einem ruhenden Außengehäuse, mehreren mit dem Außengehäuse verbundenen Statorschaufeln mit freien inneren Enden, und einem innerhalb der Statorschaufelreihe ruhenden Innengehäuse besteht.
Die Fig. 7f zeigt eine Baugruppe, bestehend aus einem ruhenden Innengehäuse, mehreren mit dem Innengehäuse verbundenen Statorschaufeln mit freien äußeren Enden, und einem die Statorschaufelreihe umgebenden Außengehäuse.
Die Fig. 7g verdeutlicht eine Baugruppe, welche aus einem ruhenden Innen- und Außengehäuse besteht, sowie mehreren mit dem Innen- und Außengehäuse verbundenen Statorschaufeln.

Die Führung des entnommenen Fluids erfolgt über Strömungswege an der Peripherie des Ringkanals oder innerhalb von Schaufeln und ihrer umgebenden Bauteile. Das Fluid wird dabei entweder bei freier Strömung oder aber mit Hilfe mindestens eines im Strömungsweg befindlichen Drosselorgans, das unverstellbar oder auch regelbar sein kann, aus dem Ringkanal im Bereich der betroffenen Schaufelreihe herausgeführt. Dieses Abführen des Fluids erfolgt mit dem Ziel, entweder das Fluid vollständig von der Strömungsarbeitsmaschine oder von der die Strömungsarbeitsmaschine einschließenden Gesamtanlage (Fördersystem, Gasturbine oder Triebwerk) zu entfernen, oder das Fluid dem Ringkanal der Strömungsarbeitsmaschine oder der Gesamtanlage wieder zuzuführen.

Die notwendigen Elemente des Strömungsweges können als einfacher Hohlraum, als Ringraum, als Rohrleitung, als Kanal, als Düse oder als Diffusor beliebiger Querschnittsform ausgestaltet sein und werden im Folgenden unter dem Begriff "Kammer" zusammengefasst.

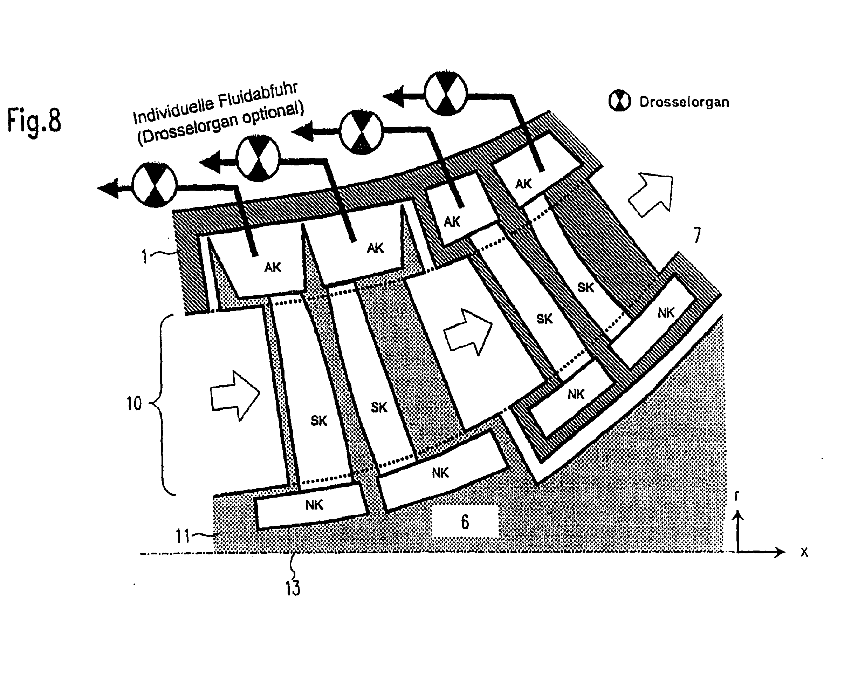

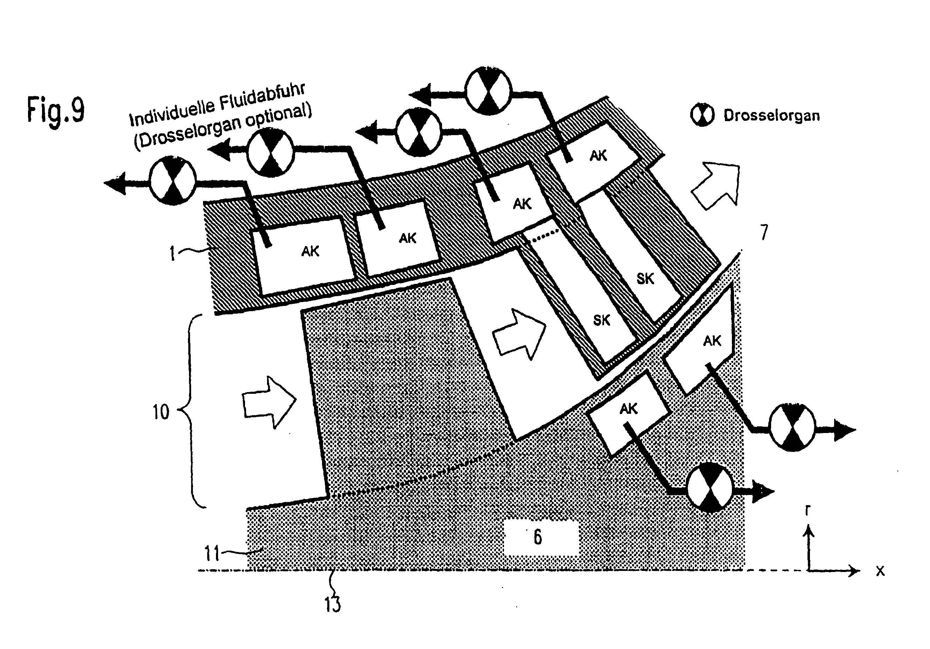

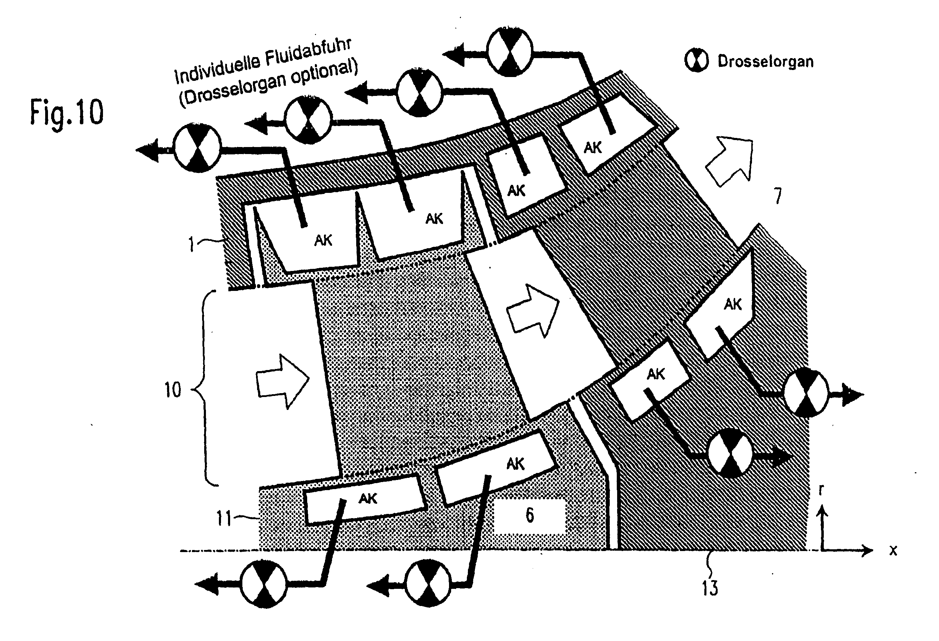

Die Fig. 8 bis 10 zeigen unterschiedliche Ausgestaltungsvarianten mit Konfigurationen, bei welchen Abfuhrkammern (AK), Schaufelinnenkammern (SK) und Nabenkammern (NK) vorgesehen sind.

Im Einzelnen zeigen die Fig. 8 bis 10 Ausgestaltungsvarianten, bei welchen den einzelnen Schaufelreihen jeweils mindestens eine Kammer am oder im Gehäuse zugeordnet ist, durch die Fluid von der Schaufelreihe entfernt wird (Abfuhrkammer AK). Für den Fall, dass mindestens eine weitere Kammer im Inneren mindestens einer Schaufel existiert, die sich über die Gesamtheit oder nur Teile der Schaufelhöhe erstreckt (Schaufelinnenkammer SK), kann jede Abfuhrkammer AK mit mindestens einer Schaufelinnenkammer SK in Verbindung stehen und von dort Fluid entgegennehmen. Besitzt die Schaufel eine feste Anbindung zur inneren Ringkanalkontur, so kann als letztes Kammerglied des zur Fluidentfernung konzipierten Gesamtströmungsweges mindestens eine Kammer an oder in der Nabe außerhalb des Ringkanals existieren (Nabenkammer NK), die mit mindestens einer Schaufelinnenkammer SK in Verbindung steht und dieser Fluid zuführt.

Besitzt die Schaufel ein freies Ende mit Radialspalt an der Nabe oder weist die Schaufel keine über die gesamte Schaufelhöhe reichende Schaufelinnenkammer auf, kann zur Fluidentfernung an der Nabe ebenfalls mindestens eine Abfuhrkammer an oder in der Nabe außerhalb des Ringkanals existieren.

Abfuhrkammern und Nabenkammern erstrecken sich über die Gesamtheit oder nur Teile des Maschinenumfangs. Die Abfuhrkammern dienen der Wegleitung des Fluids von der betreffenden Schaufelreihe, wobei die Schaufelinnenkammern und die Nabenkammern Hilfsmittel sind, um den Zugang zu den relevanten Schaufelspitzen- und Ringkanaloberflächen (SRO) der betreffenden Schaufelreihe herzustellen.

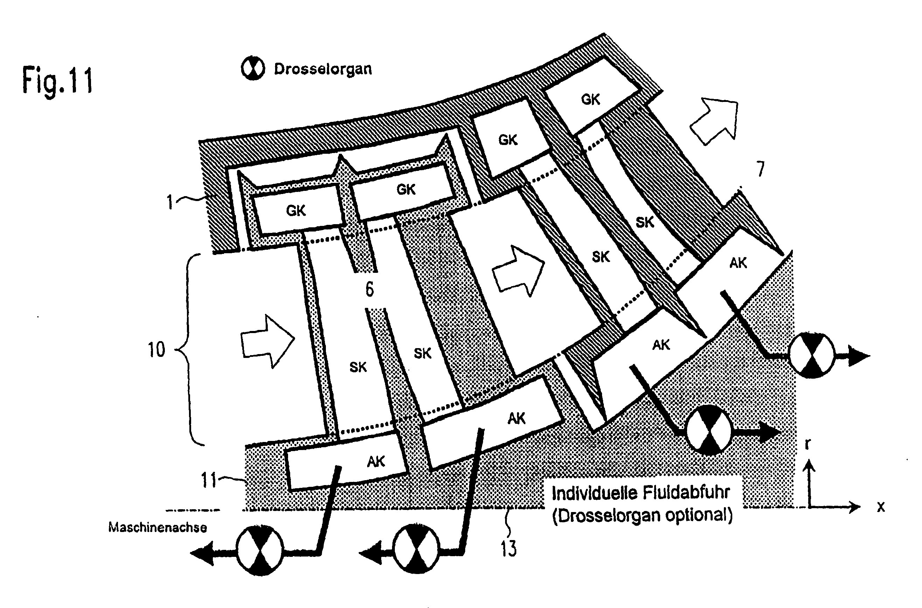

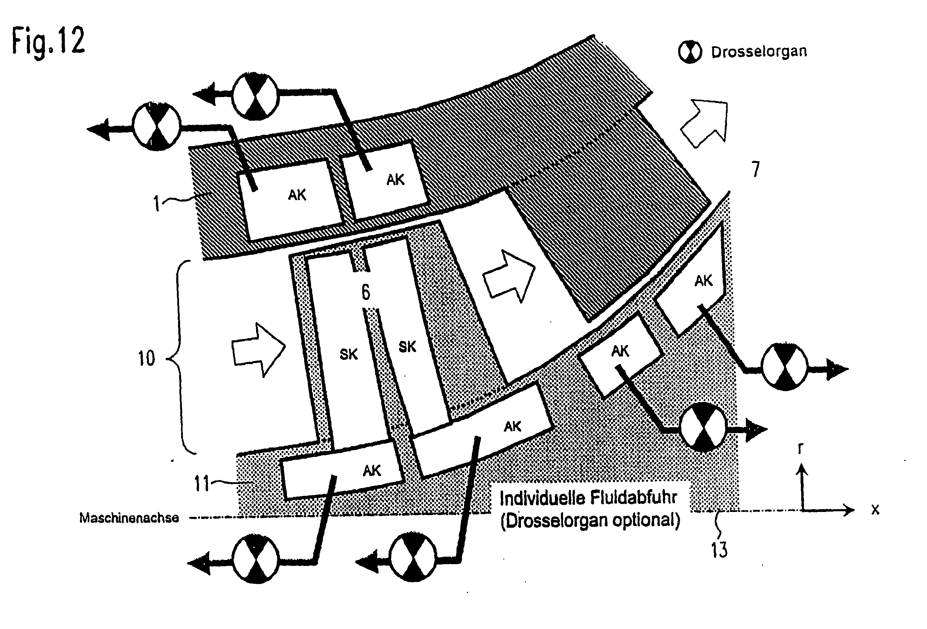

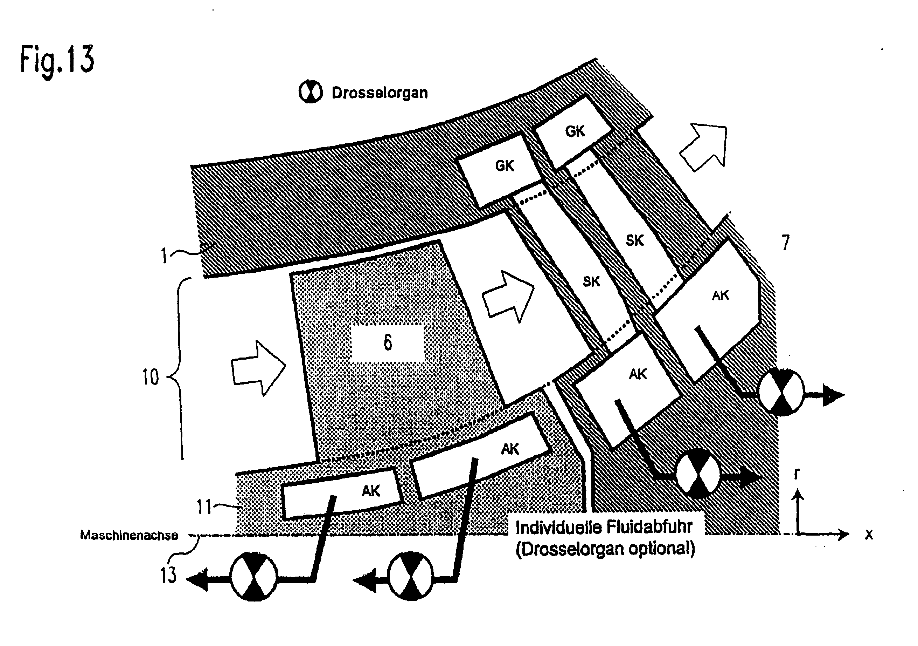

Während in den Fig. 8 bis 10 Ausgestaltungsformen gezeigt wurden, bei welchen mindestens eine Abfuhrkammer am oder im Gehäuse angeordnet ist, zeigen die Fig. 11 bis 13 Ausgestaltungsformen, bei welchen mindestens eine Kammer an oder in der Nabe angeordnet ist, durch die Fluid von der Schaufelreihe entfernt wird (Abfuhrkammer AK). Für den Fall, dass mindestens eine weitere Kammer im Inneren mindestens einer Schaufel existiert, die sich über die Gesamtheit oder nur Teile der Schaufelhöhe erstreckt (Schaufelinnenkammer SK), kann jede Abfuhrkammer AK mit mindestens einer Schaufelinnenkammer SK in Verbindung stehen und von dort Fluid entgegennehmen. Besitzt die Schaufel eine feste Anbindung zur äußeren Ringkanalkontur, so kann als letztes Kammerglied des zur Fluidentfernung konzipierten Gesamtströmungsweges mindestens eine Kammer am oder im Gehäuse außerhalb des Ringkanals existieren (Gehäusekammer GK), die mit mindestens einer Schaufelinnenkammer SK in Verbindung steht und dieser Fluid zuführt.

Besitzt die Schaufel ein freies Ende mit Radialspalt am Gehäuse oder weist die Schaufel keine über die gesamte Schaufelhöhe reichende Schaufelinnenkammer SK auf, kann zur Fluidentfernung am Gehäuse ebenfalls mindestens eine Abfuhrkammer am oder im Gehäuse außerhalb des Ringkanals existieren.

Die Abfuhrkammern und die Gehäusekammern erstrecken sich über die Gesamtheit oder nur Teile des Umfangs der Strömungsarbeitsmaschine.

Die Abfuhrkammern dienen zur Wegleitung des Fluids von der betreffenden Schaufelreihe. Die Schaufelinnenkammern und die Gehäusekammern sind Hilfsmittel, um den Zugang zu relevanten Schaufelspitzen- und Ringkanaloberflächen (SRO) im Bereich der betreffenden Schaufelreihe herzustellen.

Es ist vorgesehen, dass bei einer Schaufelreihe der im Zusammenhang mit den Fig. 8 bis 10 bzw. 11 bis 13 beschriebenen Ausgestaltungsformen an mindestens einer Schaufelspitzen- und Ringkanaloberfläche (SRO) an mindestens einer ihrer Schaufeln und/oder mindestens einem ihrer den Ringkanal begrenzenden Bauteile mindestens eine Fluidentnahmevorrichtung vorgesehen ist, die eine Verbindung zwischen der Schaufelspitzen- und Ringkanaloberfläche (SRO) und einer Abfuhrkammer AK, einer Schaufelinnenkammer SK, einer Nebenkammer NK oder einer Gehäusekammer GK herstellt. Die konstruktive Ausführung der Fluidentnahmevorrichtung erfolgt durch mechanische, chemische oder thermische Materialabtragsverfahren an dem die Schaufelspitzen- und Ringkanaloberfläche (SRO) bildenden Bauteil.

In einer alternativen Ausgestaltung der Erfindung erhält die Fluidentnahmevorrichtung ihre Begrenzungen durch die Kombination mindestens zweier vorbereiteter Einzelbauteile, die lose oder fest zusammengefügt werden.

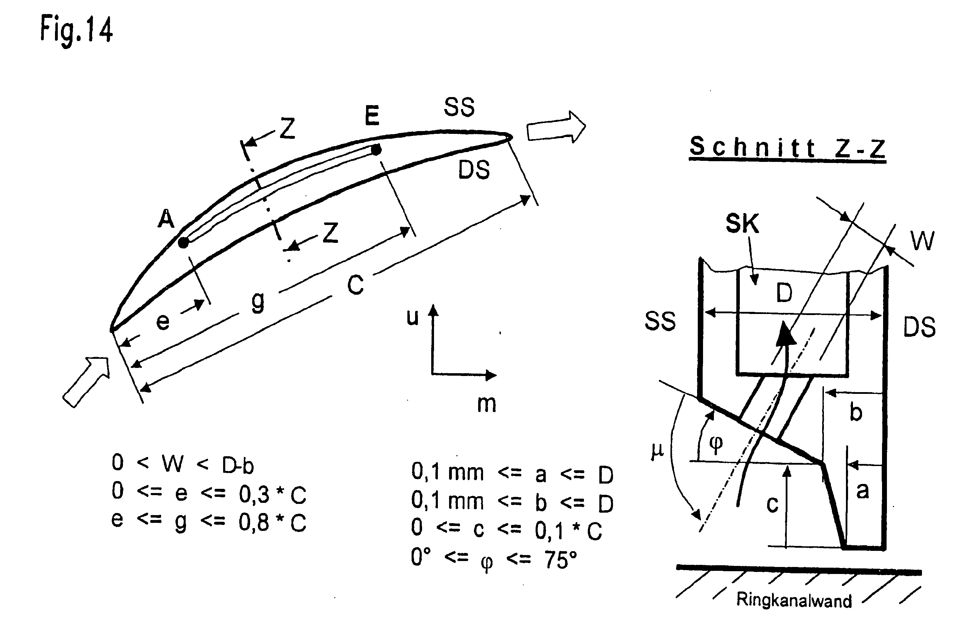

Die Fig. 14 bis 16 zeigen Beispiele der Fluidentnahmevorrichtung an Schaufelspitzen- und Ringkanaloberflächen (SRO) des Typs C, bei welchen ein entlang der Schaufelspitze angebrachter Schlitz bzw. funktional ähnliche Ersatzelemente vorgesehen sind. Schlitze oder Ersatzelemente können unterschiedlichen Schaufelkammern zugeordnet sein.

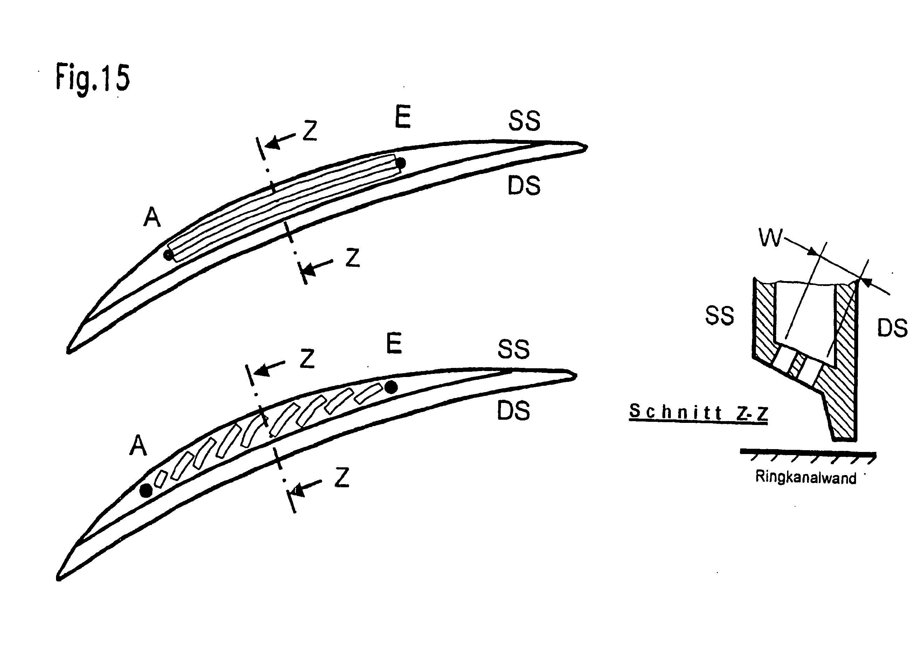

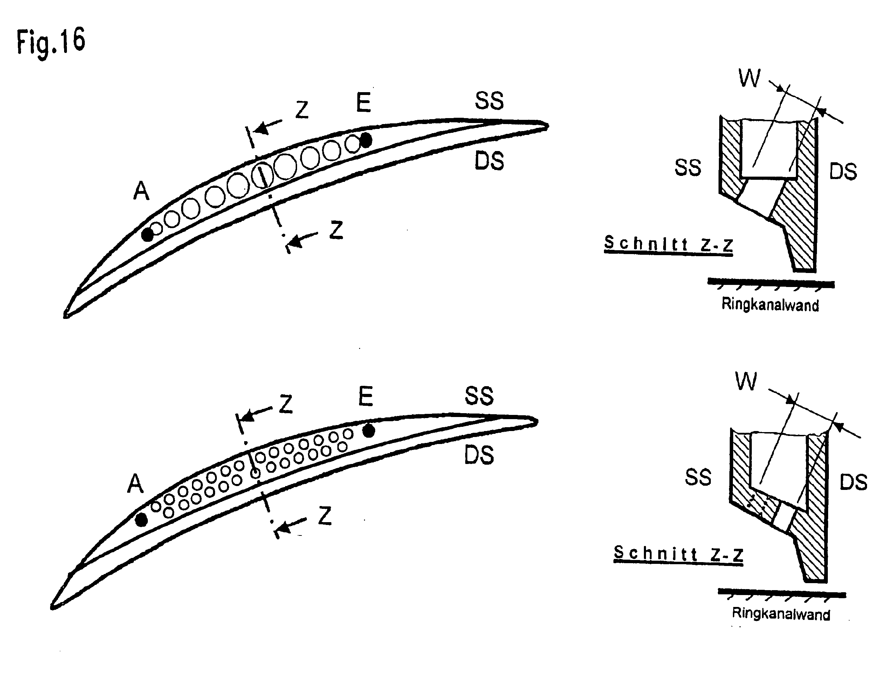

Dabei zeigt die Fig. 14 eine Fluidentnahmevorrichtung an einer Schaufelspitzen- und Ringkanaloberfläche (SRO) des Typs C mit mindestens einem Schlitz oder Ersatzelementen. Weitere Varianten hierzu sind in den Fig. 15 und 16 abgebildet.

Betrachtet wird die Spitze einer Schaufel in dem aus Meridianströmungsrichtung und Umfangsrichtung gebildeten Koordinatensystem (m,u) siehe Fig. 14 . Die Schaufelspitze ist entweder konventionell (etwa rechtwinklig) oder mit einem Absatz ausgeführt, dessen spezifische Formgebung durch die Größen a, b, c und phi gegeben ist. Die stirnseitige Absatzbreite a hat einen Betrag von minimal einem Zehntel Millimeter und wird maximal so groß wie die örtlich vorliegende Profildicke D (0,1 mm <= a <= D). Die Absatzfußbreite b hat einen Betrag von minimal einem Zehntel Millimeter und wird maximal so groß wie die örtlich vorliegende Profildicke D (0,1 mm <= b <= D). Die Absatztiefe c beträgt bis zu 10 % der Profilsehnenlänge (0 <= c <= 0,1*C). Der Absatzneigungswinkel, der gegen die Ringkanalwand gemessen wird, nimmt Beträge zwischen 0 und 75 Grad an (0° <= phi <= 75°). Die Größen a, b, c und phi können sich in den spezifizierten Grenzen mit der jeweils betrachteten Profiltiefe ändern.

Auf der Stirnseite der Schaufelspitze befinden sich N nebeneinander verlaufende Schlitze (N >= 1), die sich entlang des Profils erstrecken. Der Anfangspunkt A der Schlitzanordnung liegt zwischen der Vorderkante VK und einer Profiltiefe von 30 % der Sehnenlänge C.

Der Endpunkt E liegt zwischen dem Anfangspunkt A und einer Profiltiefe von 80 % der Profilsehnenlänge C. Die Weite W der Schlitzanordnung ist veränderlich und nimmt maximal die je nach Profiltiefe aktuelle, um die Absatzfußbreite b reduzierte Profildicke D an (0 < W < D-b). Der Schlitz weist eckige, angefaste oder gerundete Oberflächenkanten auf. Sie besitzen an Anfangs- und Endpunkt eine eckige Form oder einen runden (langlochähnlichen) Abschluss. Die Schlitze führen senkrecht oder schräg zur Schaufelspitzenoberfläche durch das Wandmaterial in eine Schaufelkammer SK.

In der erfindungsgemäßen Form tritt - bei gleichen Regeln hinsichtlich der Positionierung und des Verlaufes an der Schaufelspitze sowie der Beschaffenheit der Oberflächenkanten und Orientierung in der Schaufelspitzenwand - an die Stelle mindestens eines Schlitzes eine Formation aus mehreren geraden oder gekrümmten Schlitzen mit einer maximalen Weite W der Schlitzkonfiguration von 0 < W < D-b.

In einer abgewandelten, jedoch nicht erfindungsgemäß Form tritt - bei gleichen Regeln hinsichtlich der Positionierung und des Verlaufes entlang der Schaufelspitze sowie der Beschaffenheit der Oberflächenkanten und Orientierung in der Schaufelspitzenwand - an die Stelle mindestens eines Schlitzes eine Formation aus mehreren Löchern.

Bei der erfindungsgemäßen Strömungsarbeitsmaschine wird somit ein bislang unerreichtes Maß an Grenzschichtbeeinflussung erzielt. Dies ist bei unterschiedlichsten Arten von Strömungsarbeitsmaschinen, wie etwa Bläsern, Verdichtern, Pumpen und Ventilatoren möglich. Je nach Ausführungsvariante sind erfindungsgemäß eine aerodynamische Belastung und eine Strömungsumlenkung möglich, die bis zu 50% über den nach dem Stand der Technik erreichten Werten liegen. Für festgeschriebene Leistungswerte einer Strömungsarbeitsmaschine lässt sich unter Beibehaltung oder Verbesserung des Wirkungsgrades von bis zu 1% die Anzahl der verbauten Teile um etwa 30% gegenüber einer konventionellen Bauweise senken. Dabei sinken die Kosten um 10% bis 15%. Bei Einsatz eines neuen Schaufelkonzeptes im Verdichter eines Flugtriebwerks mit rund 25.000 Pfund Schub ergibt sich erfindungsgemäß eine Reduzierung des spezifischen Kraftstoffverbrauchs von bis zu 0,5% und eine Gewichtsersparnis von rund 5%.

### Bezugszeichenliste

- 1: Gehäuse
- 2: Schaufel
- 3: Schlitz
- 4: Schlitz
- 5: Stator
- 6: Rotor
- 7: Stator
- 8: Rotorschaufel
- 9: Statorschaufel
- 10: Ringkanal
- 11: Rotortrommel (Nabe)
- 12: Rotortrommel (Nabe)
- 13: Maschinenachse

## Patentansprüche

1. Strömungsarbeitsmaschine mit zumindest einem Rotor (6), der mehrere an einer rotierenden Welle befestigte Rotorschaufeln (8) umfasst, sowie mit einem einen Ringkanal bildenden Gehäuse (1), welches unter Durchströmung des Rotors (6) und/oder eines Stators (7) von einem Fluid durchströmt wird, wobei Mittel zur Entnahme von Fluid an mindestens einer Schaufel einer Schaufelreihe des Rotors (6) oder des Stators (7) an aerodynamisch kritischen Orten auf Schaufelspitzen- und Ringkanaloberflächen (SRO) vorgesehen sind, wobei zur gezielten Beeinflussung der dreidimensionalen Strömung im Bereich der Schaufelenden die Mittel zur Entnahme von Fluid an Schaufelspitzen- und Ringkanaloberflächen (SRO) an den Schaufeln an deren freien Schaufelenden ausgebildet sind, die der Naben- oder der Gehäusekontur des Ringkanals (10) zugewandt sind,
wobei die Führung des abzuführenden Fluids innerhalb von Schaufeln (8, 9) erfolgt,
wobei das Schaufelende eine absatzartige Ausnehmung aufweist, wobei die stirnseitige Absatzbreite a einen Wert von 0,1 mm <= a <= D mit D gleich der örtlichen Profildicke D aufweist, wobei die Absatzfußbreite b einen Wert von 0,1 mm <= b <= D aufweist und wobei die Absatztiefe c einen Wert von 0 <= c <= 0,1*C aufweist, wobei C die Profilsehnenlänge ist, wobei die Mittel zur Fluidentnahme eine Formation aus N Schlitzen umfassen, welche sich entlang des Profils erstrecken, und wobei der Anfangspunkt A der Schlitzformation zwischen einer Vorderkante VK und einer Profiltiefe von 30 % der Sehnenlänge liegt und wobei der Endpunkt E der Schlitzformation zwischen dem Anfangspunkt A und einer Profiltiefe von 80 % der Sehnenlänge liegt, wobei die absatzartige Ausnehmung unter einem Absatzneigungswinkel ϕ mit einem Wert von 0° <= ϕ <= 75°, der gegen die Ringkanalwand gemessen wird, geneigt ist und in der absatzartigen Ausnehmung die Mittel zur Fluidentnahme ausgebildet sind, und wobei die Schlitzformation eine maximale Weite W mit 0 < W < D-b aufweist, **dadurch gekennzeichnet, dass** die Schlitzformation mehrere gerade oder gekrümmte Schlitzen umfasst, also N > 1.

2. Strömungsarbeitsmaschine nach Anspruch 1, **dadurch gekennzeichnet, dass** eine Weite W der Schlitzformation einen Wert zwischen 0 < W < D-b aufweist.

3. Strömungsarbeitsmaschine nach einem der Ansprüche 1 bis 2, **dadurch gekennzeichnet, dass** die Schlitze eckige, angefasste oder gerundete Oberflächenkanten mit am Anfangspunkt und Endpunkt eckiger Form oder rundem Abschluss umfassen.

4. Strömungsarbeitsmaschine nach einem der Ansprüche 1 bis 3, **dadurch gekennzeichnet, dass** senkrecht zu einer Profiltiefenrichtung betrachtet ein Schlitz durch das Wandmaterial in eine im Innenraum der Schaufel ausgebildete Schaufelkammer (SK) führt.

## Claims

1. Fluid-flow machine with at least one rotor (6), which includes several rotor blades (8) attached to a rotating shaft and with a casing (1) which forms an annulus and is passed by a fluid flowing through the rotor (6) and/or a stator (7), with means for the removal of fluid being provided on at least one blade of a blade row of the rotor (6) or the stator (7) on aerodynamically critical points on blade tip and annulus surfaces (SRO), with for targeted influencing the three-dimensional flow in the area of the blade ends the means for fluid removal on blade tip and annulus surfaces (SRO) being provided on the blades at their free blade ends facing the hub or casing contour of the annulus (10), with the guidance of the fluid to be removed being effected within the blades (8, 9), with the blade end featuring a step-like recess, with the front-side step width "a" having a value of 0.1 mm ≤ a ≤ D, where D equals the local profile thickness D, with the step foot width "b" having a value of 0.1 mm ≤ b ≤ D and with the step depth "c" having a value of 0 ≤ c ≤ 0.1 * C, with C being the profile chord length, with the means for fluid removal including a formation of N slots, which extend along the profile, and with the starting point A of the slot formation being located between a leading edge VK and a profile depth of 30% of the chord length and with the end point E of the slot formation being located between the starting point A and a profile depth of 80% of the chord length, with the step-like recess being inclined at a step inclination angle ϕ amounting to 0° ≤ ϕ ≤ 75° measured against the annulus wall, and the means for fluid removal being provided in the step-like recess, and with the slot formation having a maximum width W of 0 < W < D-b, **characterized in that** the slot formation includes several rectilinear or curvilinear slots, hence N > 1.

2. Fluid-flow machine in accordance with Claim 1, **characterized in that** a width W of the slot formation has a value of 0 < W < D - b.

3. Fluid-flow machine in accordance with one of the Claims 1 to 2, **characterized in that** the slots include angular, chamfered or rounded surface edges with angular shape or round rim at the starting and end points.

4. Fluid-flow machine in accordance with one of the Claims 1 to 3, **characterized in that**, when viewed vertically to a profile depth direction, a slot leads through the wall material into a blade chamber (SK) provided in the interior of the blade.

## Revendications

1. Turbomachine avec au moins un rotor (6) comprenant plusieurs aubes de rotor (8) fixées sur un arbre rotatif, ainsi qu'un carter (1) formant un canal annulaire qui est traversé par un fluide lors de l'écoulement dans le rotor (6) et/ou un stator (7), sachant que des moyens pour prélever du fluide à au moins une aube d'une rangée d'aubes du rotor (6) ou du stator (7) sont prévus à des points aérodynamiquement critiques sur des surfaces des bouts d'aubes et du canal annulaire (SRO), sachant que pour influencer de manière ciblée le flux tridimensionnel dans la zone des bouts d'aubes, les moyens destinés à prélever du fluide aux surfaces des bouts d'aubes et du canal annulaire (SRO) sont prévus aux aubes et à leurs bouts d'aubes libres orientés vers le contour du moyeu ou du carter du canal annulaire (10), sachant que le guidage du fluide à prélever a lieu à l'intérieur d'aubes (8, 9), sachant que l'extrémité de l'aube présente un évidement en forme de gradin, que la largeur frontale « a » du gradin a une valeur telle que 0,1 mm ≤ a ≤ D où D est l'épaisseur locale D du profil, que la largeur « b » du fond du gradin a une valeur telle que 0,1 mm ≤ b ≤ D et que la profondeur « c » du gradin a une valeur telle que 0 ≤ c ≤ 0,1* C, où C est la longueur de corde du profil, que les moyens pour prélever du fluide comprennent une formation de N fentes, qui s'étendent le long du profil, et que le point initial A de la formation des fentes est situé entre un bord d'attaque VK et une profondeur de profil égale à 30 % de la longueur de corde et que le point final E de la formation des fentes est situé entre le point initial A et une profondeur de profil égale à 80 % de la longueur de corde, que l'évidement en forme de gradin est incliné selon un angle d'inclinaison de gradin ϕ d'une valeur telle que 0 ≤ ϕ ≤ 75°, qui est mesuré contre la paroi du canal annulaire, et que les moyens pour prélever du fluide sont formés dans l'évidement en forme de gradin, et que la formation de fentes a une largeur maxi. W telle que 0 < W < D - b, **caractérisée en ce que** la formation de fentes est constituée de plusieurs fentes rectilignes ou curvilignes, ainsi N>1.

2. Turbomachine selon la revendication n° 1, **caractérisée en ce qu'**une largeur W de la formation de fentes a une valeur telle que 0 < W < D - b.

3. Turbomachine selon une des revendications n° 1 à n° 2, **caractérisée en ce que** les fentes comprennent des arêtes de surface anguleuses, biseautées ou arrondies avec une forme anguleuse ou une bordure arrondie au point initial et au point final.

4. Turbomachine selon une des revendications n° 1 à n° 3, **caractérisée en ce que**, vue perpendiculairement à un sens de profondeur du profil, une fente mène à une chambre d'aube (SK) formée à l'intérieur de l'aube, en traversant le matériau de la paroi.
